Europäisches Patentamt

European Patent Office

Office européen des brevets

(19)

(11) Publication number: **0 088 583**

**B1**

(12) **EUROPEAN PATENT SPECIFICATION**

(45) Date of publication of patent specification: **26.08.87**

(51) Int. Cl.⁴: **H 04 N 5/20, H 04 N 9/76**

(21) Application number: **83301094.5**

(22) Date of filing: **01.03.83**

(54) **Image processing apparatus.**

(30) Priority: **02.03.82 JP 32590/82**

(43) Date of publication of application:
**14.09.83 Bulletin 83/37**

(45) Publication of the grant of the patent:
**26.08.87 Bulletin 87/35**

(84) Designated Contracting States:
**AT DE FR GB NL**

(56) References cited:
**EP-A-0 002 365**
**GB-A-2 046 051**

**PATENTS ABSTRACTS OF JAPAN, vol. 5, no.
19(E-44)(691), 4th February 1981**

**SMPTE JOURNAL, vol. 87, no. 1, January 1978,
pages 15-19, New York, USA, Y. ETO et al.:
"Digital processing amplifier and color
encoder"**

**PATENTS ABSTRACTS OF JAPAN, vol. 5, no.
19(E-44)(691), 4th February 1981**

(73) Proprietor: **SONY CORPORATION
7-35 Kitashinagawa 6-Chome Shinagawa-ku
Tokyo 141 (JP)**

(72) Inventor: **Nagumo, Fumio
1401-117, Kamiogino Atsugi-shi
Kanagawa-ken (JP)**

(74) Representative: **Ayers, Martyn Lewis Stanley
et al
J.A. KEMP & CO. 14 South Square Gray's Inn
London, WC1R 5EU (GB)**

# 0 088 583

**Description**

The present invention relates to an apparatus for processing image signals in which image signals from the image sensors are transduced in accordance with a non-linear input-output characteristic.

Generally, the image processing circuitry of the conventional color video camera has a means for performing gamma correction. This gamma correction is used to correct the image signals so that the overall characteristic of the system from the image pickup tube to the image receiving tube satisfies the expression ($\gamma=1$).

However, it is sometimes necessary to perform non-linear transduction other than the standard gamma correction dependent upon the shooting conditions in use of the video camera. For example, it is preferable to utilize non-linear transduction for obtaining clearer contrast under back lit conditions. It is convenient if the transduction characteristic can be suitably changed in response to shooting conditions for indoor shooting or outdoor shooting.

However, in the conventional analog-type processing circuitry it is impossible to change the transduction characteristic to the desired one.

This invention contemplates the provision of a solution to this problem by providing an apparatus for processing image signals in which the image signals from the video camera can be transduced in compliance with a desired input-output characteristic.

GB—2 046 051 discloses an apparatus generally in accordance with the precharacterising portion of claim 1 in that it discloses the concept of converting video luminance data to digital form, defining a "keyhole" in the picture area and carrying out grey-level conversion of the digital video data within the keyhole by the use of a look-up table.

JP—A—55.147882 discloses apparatus according to the precharacterising part of claim 1, which is used to process the luminance component of a TV signal.

The present invention seeks to provide an improved form of image signal processing apparatus useful for processing digital colour TV signals.

According to the present invention, there is provided an apparatus for processing image signals by the non-linear transduction of input image signals to output image signals, said apparatus comprising:

(a) an analogue to digital converter for converting said input image signals into digital image signals;

(b) address selecting means to which said digital image signals from said analogue to digital converter and address data from a microprocessor are supplied; and

(c) a memory in which the data in a data conversion table from said microprocessor is, in use, written according to said address data, and from which the output data corresponding to said digital image signals is read out in accordance with said data conversion table.

characterized in that the analogue to digital converter is adapted to convert the input image signals into respective primary colour digital signals, in that the memory has three portions corresponding to respective ones of said three primary colours, each of said portions being addressable by the output of said address selecting means in that in each of said portion of said memory a plurality of data conversion table means having different transducing characteristics are written in use, a control circuit is provided for selecting which of said data conversion table means is used for transduction, and in that the control circuit is arranged to select a particular data conversion table means in accordance with the image area being displayed.

The memory may be used as a memory for said microprocessor. Other features are defined in the sub-claims appended hereto.

As will become apparent from the following description, the invention can provide an apparatus for processing image signals in which ordinary tone wedge correction such as gamma correction or the like can be performed, and in which the tone wedge transducing characteristics can be three-dimensionally changed by using RAMs and a microcomputer. In other words, the gradation and the color in a designated area in the screen can be made different from those in the other area. Two-dimensional information such as characters and figures, or the like can be mixed or superimposed on the picture in the screen.

These and other objects, features and advantages of this invention will be more apparent from the following description of preferred embodiments, taken in conjunction with the accompanying drawings, in which:—

Fig. 1 is a block diagram of an embodiment of the present invention;

Fig. 2 is a block diagram of an embodiment of the video processor in which the invention is employed;

Figs. 3A—C are schematics for describing the tone wedge characteristics;

Fig. 4 is a schematic diagram of an example of the pattern mixing according to the illustrated embodiment of the invention, on which numerals are superimposed;

Figs. 5A—D are schematic diagrams for describing an example of the pattern mixing in the illustrated embodiment of the invention;

Figs. 6A—D are schematic diagrams for describing another example of the mixing pattern; and

Fig. 7 is a block diagram showing the construction of a part of another embodiment of the invention.

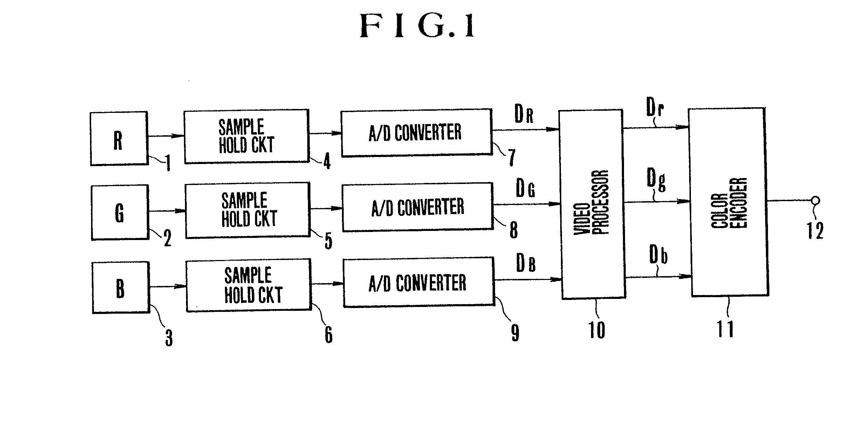

An embodiment of this invention will be described hereinbelow with reference to the drawings. Fig. 1 shows the overall construction of a digital camera system. Reference numerals 1, 2 and 3 respectively indicate image sensors, for example, CCDs (Charge Coupled Devices) which generate three primary color

2

signals such as red, green and blue. Each output of these CCDs 1, 2 and 3 is sampled by sample holding circuits 4, 5 and 6 and supplied to A/D (analogue to digital) converters 7, 8, and 9 to obtain digital color signals $D_R$, $D_G$ and $D_B$. The following processes are possible: point sequential color signals are generated using one or two CCDs; one CCD is disposed apart from other two CCDs by staggering 1/2 picture element; the transmitting route of the digital color signals is changed by performing interpolation, or the like.

The above-mentioned digital color signals $D_R$, $D_G$ and $D_B$ are supplied to a video processor 10. This video processor 10 has a memory and a microcomputer as will be described later. Look-up tables are stored in this memory to perform ordinary tone wedge transduction, so that it is possible to vary the tone wedge transducing characteristics three-dimensionally.

The digital color signals $D_r$, $D_g$ and $D_b$ to be output from this video processor 10 are supplied to a color encoder 11. This color encoder 11 includes a matrix circuit for generating a luminance signal and two color difference signals, a modulator for digitally modulating the color difference signals, a YC mixer, a synchronizing circuit, and a burst adding circuit. The color encoder 11 outputs from its output terminal 12 composite color video signals of, for example, the NTSC system. It may be possible to obtain the analog composite color video signals by providing a D/A (Digital to analogue) converter.

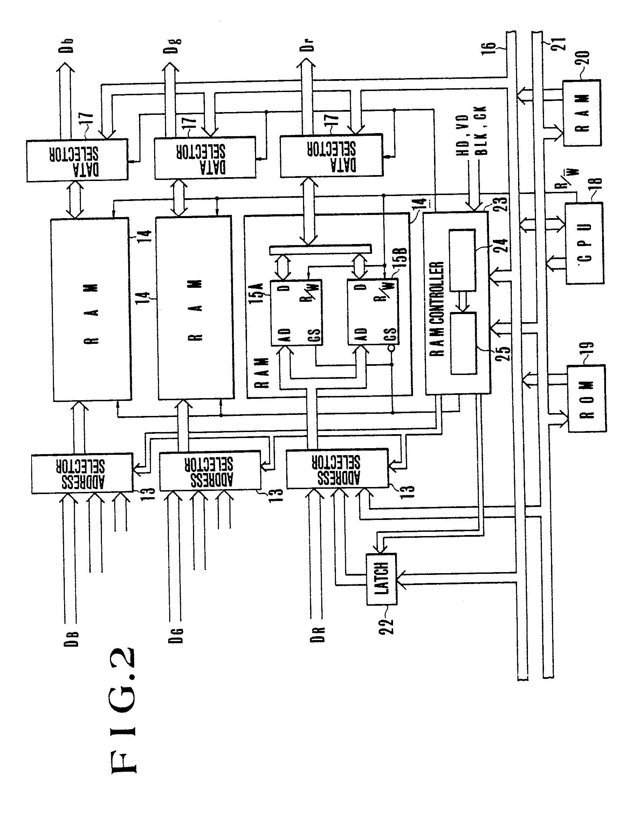

Fig. 2 shows the construction of the video processor 10; only the processing of color signal $D_R$ will be described; the other two color signals $D_G$ and $D_B$ are also similarly processed, but detailed description of these is omitted for simplicity.

One sample of the digital color signal $D_R$ is converted into, for example, 8 bits and the signal $D_R$ becomes the address input to an RAM 14 through an address selector 13. The RAM 14 includes two RAMs 15A and 15B. The predetermined look-up tables are written in this RAM 14 from a data bus 16 through a data selector 17. The color signal $D_r$ to be read from the RAM 14 is output through the data selector 17.

The look-up tables to be written in the RAM 14 are used to output the 8-bit data $D_r$ by utilizing the input signal $D_R$ as a key and to perform, e.g. standard gamma correction to a gamma of one.

The above-mentioned look-up tables for this tone wedge transduction are produced by a CPU 18 and an ROM 19. The look-up table for the ordinary gamma correction and the necessary data are stored in the ROM 19. In case of performing other tone wedge processing, the data stored in this ROM 19 is read out and calculated in the CPU 18 to produce different look-up tables. An RAM 20 is used for the purpose of this calculation and for temporary storage. Reference numeral 21 designates an address bus.

The CPU 18 serves to control the write-in/read-out of the RAM 14. The n-word data from a latch 22 is supplied to the address selector 13. This n-word data is produced by the CPU 18 on the basis of user input from a keyboard or similar device and supplied to the data bus 16. The address selector 13 further receives, as the third input, the address data from the address bus 21. This address data is used to update the content of the RAM 14.

An RAM controller 23 forms the following three signals, i.e. the selection signal for the abovementioned address selector 13 and the data selector 17; the control signal to designate the data which is captured in the latch 22; and the chip selection signal for two RAMs 15A and 15B in the RAM 14. The data and the addresses from the data bus 16 and the address bus 21 are supplied to this RAM controller 23. The timing pulses and the clock pulses such as horizontal sync signals, vertical sync signals, blanking pulses for the system are also supplied to the RAM controller 23. This RAM controller 23 includes a picture address counter 24 and a pattern signal generating circuit 25. Thus, a pattern signal with a timing corresponding to a given pattern in the screen can be formed.

With respect to other color signals $D_G$ and $D_B$, the address selector 13, RAM 14, data selector 17, and latch 22 are respectively provided in the same way as described in the color signal $D_R$. The microcomputer such as the RAM controller 23 and the CPU 18 is used in common for the three color signals.

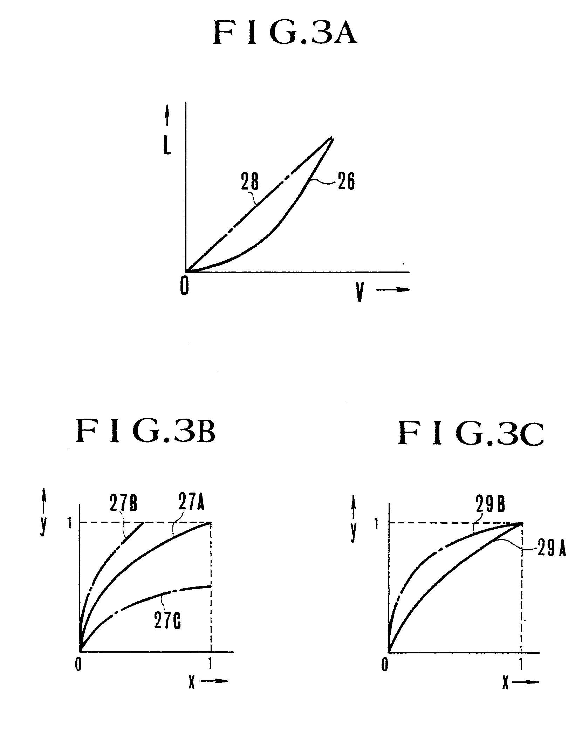

As already known, the relation between the signal voltage V of the image receiving tube and the light emitting output L is expressed by $L=KV^\gamma$, wherein K is a proportional constant and, in general, $\gamma \doteqdot 2.2$ as indicated by a reference numeral 26 in Fig. 3A. As shown at 27A in Fig. 3B, a gamma correction of

$$y = x^{\frac{1}{\gamma}}$$

is initially performed on the signal voltage in order to obtain a linear relationship between the signal voltage V and the light emitting output L as indicated by an alternate long and short dash line 28 in Fig. 3A. In Figs. 3B and 3C, the x-axis represents the relative levels of the input digital color signals $D_R$, $D_G$ and $D_B$, and the y axis represents the relative levels of the color signals $D_r$, $D_g$ and $D_b$ after correction, respectively. The look-up tables to be stored in the RAM 14 in the abovementioned video processor 10 approximate the tone wedge transducing characteristic as shown in Fig. 3B.

As shown in alternate long and short dash lines 27B and 27C in Fig. 3B, gain control, i.e. picture control, can be realized by performing different tone wedge transducing characteristics. The white balance can be also adjusted by independent gain control of each color signal. Reference numeral 29A in Fig. 3C indicates the ordinary tone wedge transducing characteristic ($y=x^{0.45}$). An alternate long and short dash line 29B designates a specific example of the tone wedge transducing characteristic of $y=x^{0.45+\alpha}$). This specific transduction enables the correction of image signals in the case where a subject is shot under backlit condition. In other words, the output level near the white is compressed and that near the black is expanded, so that many kinds of gradations on the black side are made possible, thereby preventing the subject which receives the counterlight becoming dark.

As described above, two transducing characteristics $f(x)$ and $g(x)$ are used to make the look-up tables of the various tone wedge transducing characteristics. That is to say, $(y=f(x))$ and $(\Delta y=\{g(x)-f(x)\})$ are initially stored in the ROM 19 in the microcomputer, and the intermediate data is generated according to the following expression.

$$y_i=(1-a_i)f(x)+a_ig(x)$$
$$=f(x)+a_i\{g(x)-f(x)\}$$
$$=f(x)+a_i+a_i\Delta y.$$

It is possible to produce a look-up table having an arbitrary tone wedge transducing characteristic between $f(x)$ and $g(x)$ by properly selecting the value of this coefficient $a_i$.

Assuming that

$$a_i=\frac{1}{m}(1=0,1,2,...m),$$

we obtain

$$y_i=f(x)+\frac{1}{m}\Delta y=y_{i-1}+\frac{1}{m}\Delta y$$

wherein $y_{i-1}$ is the value of one step before $y_i$; thus for example m kinds of intermediate characteristics can be derived between $f(x)$ and $g(x)$. It is assumed that:

$$a_i=\begin{cases}1-2^{-1}, & \text{(where, } i=0,1,...m-1)\\ 1, & \text{(where, } i=m)\end{cases}$$

in order to obtain m kinds of intermediate characteristics which shift from $f(x)$ to $g(x)$ according to an exponential change.

The operation of an embodiment of this invention will be described again. The color signals $D_R$, $D_G$ and $D_B$ are selected by the address selector 13 and supplied to the RAM 14 when performing the ordinary tone wedge transduction such as the gamma correction. The color signals $D_r$, $D_g$ and $D_b$ which are read from the RAM 14 are selected by the data selector 17 and fetched. Either of the two RAMs 15A and 15B in the RAM 14 is selectively enabled by a chip selection signal.

In case of rewriting the look-up tables, the address from the address bus 21 is selected by the address selector 13, the data from the data bus 16 is selected by the data selector 17, and either of the RAMs 15A and 15B is set into the write-enabled state. The look-up tables can be rewritten by sequentially changing the addresses.

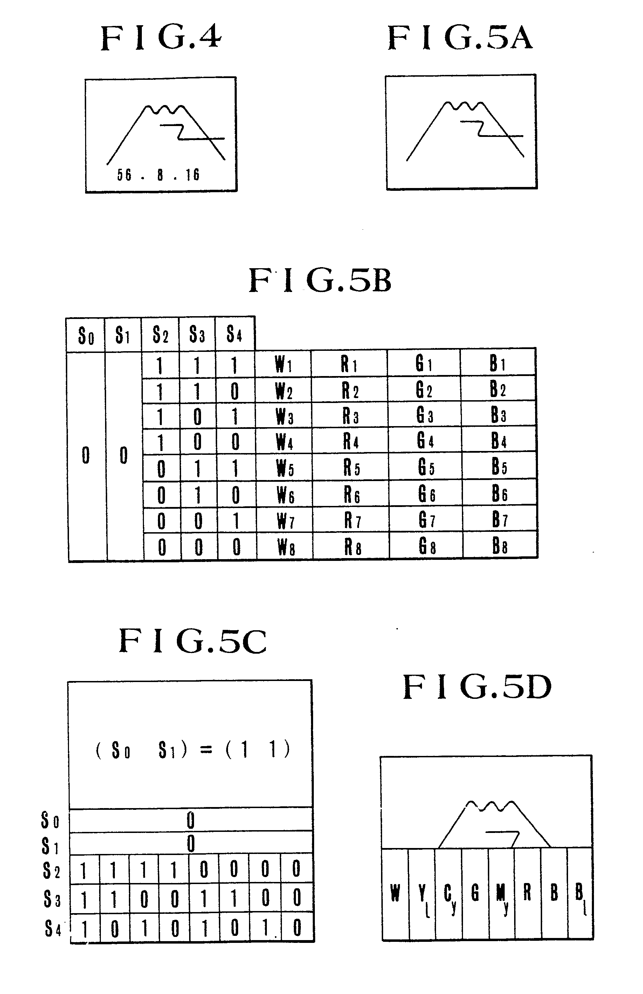

The correspondence between the pattern signal which is formed by the RAM controller 23 and the selection signal of the address selector 13 can cause a plurality of patterns to be mixed in the display screen. In this case, the data (n words are enabled) corresponding to a given color is stored preliminarily in the latch 22 under the control of the CPU 18. The selection signals corresponding to the characters and the figures or the like are generated from the horizontal and vertical sync signals by means of the RAM controller 23. Hence, as shown in Fig. 4, characters showing the date, for instance, can be superimposed in the reproduced picture.

Figs. 5A—D show the case where color bars are added in the lower half of the reproduced picture. The color signals consisting of a plurality of words which correspond to each color are stored in the latch 22. It is now assumed that the color pattern is mixed into the reproduced picture as shown in Fig. 5A. The eight words $W_1$—$W_8$ are stored in the latch 22 corresponding to each color signal. The signal for red uses the eight words $R_1$—$R_8$. The signal for green uses the eight words $G_1$—$G_8$. The signal for blue uses the eight words $B_1$—$B_8$. Each color of the color bars is expressed by those data; namely, each color is produced by the combination of the components of each of the abovementioned words $W_1$—$W_8$. For instance, white and yellow are produced as follows.

$$R_1+G_1+B_1=W \text{ (white)}$$
$$R_2+G_2+B_2=Y1 \text{ (yellow)}$$

Other colors such as cyano, green, Magenta, red, blue and black are also produced by the same method. As shown in Fig. 5B, the three-bit selection signals $(S_2, S_3, S_4)$ are supplied from the RAM controller 23 to the latch 22. Any one word among $W_1$—$W_8$ is selected. The two-bit selection signals $(S_0, S_1)$ are used for the address selector 13. When they are (0, 0), the content in the latch 22 is selected, and when they are (1, 1), the color signals $D_R$, $D_G$ and $D_B$ are selected.

These selection signals $S_0$—$S_4$ change in response to the location on the screen. As shown in Fig. 5C, the selection signals $(S_0, S_1)$ become (1, 1) in the upper half of the screen, and the color signals $D_R$, $D_G$ and $D_B$ are selected. Then selection signals $(S_0, S_1)$ become (0, 0) in the lower half of the screen and the content in the latch 22 is selected. The lower half of the screen is divided into eight vertical stripe-like forms. The selection signals $(S_2, S_3, S_4)$ in each stripe are (1, 1, 1), (1, 1, 0),...(0, 0, 0), respectively, as shown in Fig. 5C. The predetermined color signals are selected in accordance with the relationships defined in Fig. 5B.

As described above, the selection signals corresponding to the location on the screen are supplied to the address selector 13 and the latch 22. Thus, it is possible to produce the video image in which the original picture and the color bar pattern are mixed as shown in Fig. 5D.

In the illustrated embodiment of the invention, two RAMs 15A and 15B are provided as the RAM 14 for each color signal. Therefore, it is possible to perform the same pattern mixing or the like as described above.

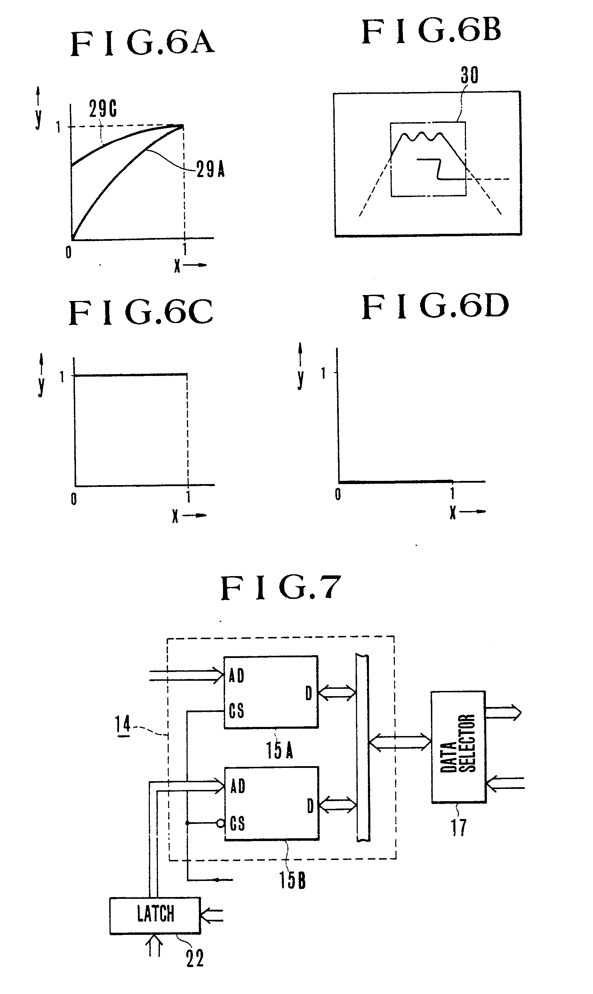

For example, as indicated at 29A in Fig. 6A, the look-up table of the tone wedge transducing characteristic for ordinary gamma correction is stored in the RAM 15A with respect to each color signal. The look-up table of a tone wedge transducing characteristic such as is shown at 29C in Fig. 6A may be stored in the other RAM 15B for each color signal. The color signals $D_R$, $D_G$ and $D_B$ are supplied as the addresses for the RAMs 15A and 15B. The chip selection signals to be formed by the RAM controller 23 are made to correspond to the location of the screen. In the interior of a rectangular frame 30 indicated by an alternate long and short dash line in Fig. 6B, the RAM 15A is used for table look-up while outside that area, the other RAM 15B is used.

The color signals are subject to the tone wedge transduction in accordance with the look-up table which is stored in the RAM 15A. Thus, the original picture is reproduced in the same manner as the ordinary one inside the frame 30. On the other hand, the RAM 15B operates outside the frame 30; therefore, a look-up table having a tone wedge transducing characteristic such as shown at 29C in Fig. 6A is used. Hence, as shown in broken lines in Fig. 6B, outside frame 30 the image as shifted towards white and has low contrast. Such a processing is a kind of keying by an external signal.

As shown in Fig. 6C, it is possible with respect to, for example, the red color signal to store a look-up table having the transducing characteristic that y always equals 1, whatever the value of x in the RAM 15B. As shown in Fig. 6D, it is also possible with respect to the other green and blue color signals to store in the respective RAMs 15B a look-up table of the transducing characteristic in which y always equals zero, whatever the value of x. In this state, when chip selection signals corresponding to the desired pattern formation are supplied to the RAMs 15A and 15B in the same manner as described above, a high level red signal is generated in response to the color signal $D_R$ in the area where the RAM 15B operates, and the other color signals of green and blue are zero.

Fig. 7 shows a part of another embodiment of this invention which in other respects may be the same as the previously described one. The input color signal $D_R$ is supplied as the address to the RAM 15A and the red signals $R_1$, $R_2$,... which are necessary for generation of, for example, the color bar pattern are initially written in the other RAM 15B. A plurality of address signals which are formed by the microcomputer are initially written in the latch 22. Although they are not shown, the other green and blue color signals are similarly processed. By the same method as already described before with respect to Fig. 5C, the chip selection signal corresponding to the area of the screen and the control signal for designating the address which is stored in the latch 22 are formed by the RAM controller 23. Thus, it is possible to perform the same pattern mixing as in Fig. 5D.

For performing the pattern mixing, the color, the display pattern, characters, etc. may be designated by utilizing magnetic cards or the like in addition to the afore-described keyboard.

The present invention has similar advantages in the application to the processing of monotone color video signals as well as to the color video signals. In case of processing the monotone color signals, the tone wedge correction such as white clipping or black level control (which may also be performed for the color video signals) may be carried out.

A ROM or PROM, etc. may be used as the solid state semiconductor memory.

## Claims

1. An apparatus for processing image signals by the non-linear transduction of input image signals to output image signals, said apparatus comprising:

(a) an analogue to digital converter (9) for converting said input image signals into digital image signals;

(b) address selecting means (13) to which said digital image signals from said analogue to digital converter and address data from a microprocessor (18) are supplied; and

(c) a memory (14) in which the data in a data conversion table from said microprocessor (18) is, in use, written according to said address data, and from which the output data corresponding to said digital image signals is read out in accordance with said data conversion table, characterised in that the analogue to digital converter is adapted to convert the input image signals into respective primary colour digital signals, in that the memory (14) has three portions corresponding to respective ones of said three primary colours, each of said portions being addressable by the output of said address selecting means (13), in that in each of said portion of said memory a plurality of data conversion table means (15A, 15B) having different transducing characteristics are written in use, a control circuit (17, 23, 24, 25) is provided for selecting which of said data conversion table means is used for transduction, and in that the control circuit (17, 23, 24, 25) is arranged to select a particular data conversion table means in accordance with the image area being displayed.

2. An apparatus according to claim 1, wherein the control circuit is arranged to select data having a given level from said microprocessor (18) in accordance with a display pattern defined by said address selecting means.

3. Apparatus as claimed in claim 2, further including a register (22) in which, in use, a plurality of said data having given levels from said microprocessor are stored, and wherein a plurality of said data in said register are selected by said control circuit.

4. Apparatus as claimed in any one of the preceding claims, wherein means are provided for designating the data conversion table which is written in said memory.

5. Apparatus as claimed in any one of the preceding claims, wherein said memory is used as a memory for said microprocessor.

6. Apparatus according to any one of the preceding claims, wherein the memory is a solid state memory.

**Patentansprüche**

1. Gerät zur Verarbeitung von Bildsignalen durch die nichtlineare Umformung von Eingangsbildsignalen in Ausgangsbildsignale mit

a) einem Analog/Digitalwandler (9) zur Umwandlung der Eingangsbildsignale in digitale Bildsignale,

b) Adressenauswahlmitteln (13), denen von dem Analog/Digitelwandler die digitalen Bildsignale sowie von einem Mikroprozessor (18) Adressendaten zugeführt werden, und

c) einem Speicher (14), in den im Betrieb die Daten in einer Datenumwandlungstabelle aus dem Mikroprozessor (18) in Abhängigkeit von den Adressendaten eingeschrieben und aus dem die den digitalen Bildsignalen entsprechenden Ausgangsdaten entsprechend der Datenumwandlungstabelle ausgelesen werden,

dadurch gekennzeichnet,

daß der Analog/Digitalwandler derart ausgebildet ist, daß er die Eingangsbildsignale in entsprechende digitale Primärfarbsignale umwandelt,

daß der Speicher (14) drei Bereiche besitzt, die jeweils einer der drei Primärfarben zugeordnet sind, wobei jeder dieser Bereiche durch den Ausgang der Adressenauswahlmittel (13) aderssierbar ist,

daß in jedem der Bereiche des Speichers im Betrieb mehrere Datenumwandlungstabellenanordnungen (15A, 15B) mit unterschiedlichen Umwandlungsscharakteristiken eingeschrieben werden,

daß eine Steuerschaltung (17, 23, 24, 25) zur Auswahl der für die jeweilige Umformung verwendeten Datenumwandlungsstabellenanordnung vorgesehen ist,

und daß diese Steuerschaltung (17, 23, 24, 25) derart angeordnet ist, daß sie in Abhängigkeit von dem anzuzeigenden Bildbereich eine spezielle Datenumwandlungstabellenanordnung auswählt.

2. Gerät nach Anspruch 1, bei dem die Steuerschaltung derart angeordnet ist, daß sie in Abhängigkeit von einem durch die Adressenauswahlmittel bestimmten Anzeigemuster aus dem Mikroprozessor (18) Daten mit einem vorgegebenen Pegel auswählt.

3. Gerät nach Anspruch 2, bei dem ferner ein Register (22) vorgesehen ist, in welchem im Betrieb mehrere der genannten Daten mit vorgegebenen Pegeln aus dem Mikroprozessor gespeichert werden, und bei dem mehrere dieser im dem Register vorhandenen Daten durch die Steuerschaltung ausgewählt werden.

4. Gerät nach einem der vorhergehenden Ansprüche, bei dem eine Einrichtung zur Bestimmung der in dem Speicher eingeschriebenen Datenumwandlungstabelle vorgesehen ist.

5. Gerät nach einem der vorhergehenden Ansprüche, bei dem der Speicher als Speicher für den Mikroprozessor verwendet wird.

6. Gerät nach einem der vorhergehenden Ansprüche, bei der der Speicher ein Festkörperspeicher ist.

**Revendications**

1. Dispositif pour traiter des signaux d'image par la transformation non linéaire de signaux d'image entrants en signaux d'image sortants, dispositif qui comprend:

(a) un convertisseur analogique-numérique (9) pour convertir les signaux d'image entrants en signaux d'image numériques;

(b) un dispositif sélecteur d'adresses (13), auquel sont appliqués les signaux d'image numériques venant du convertisseur analogique-numérique et des informations d'addresses venant d'un microprocesseur (18); et

(c) une mémoire (14) dans laquelle sont inscrites, pendant le fonctionnement, conformément à ces informations d'adresses, des informations d'une table de conversion d'information contenue dans le microprocesseur (18) et d'où sont extraites, en conformité avec cette table de conversion, des informations correspondant aux signaux d'image numériques,

caractérisé en ce que le convertisseur analogique-numérique est adapté pour convertir les signaux d'image entrants en signaux numériques de couleurs primaires respectives, que la mémoire (14) comporte trois parties, correspondant chacune à l'une des trois couleurs primaires, chacune de ces parties étant adressable par la sortie du dispositif sélecteur d'adresses (13), que chacune des parties de la mémoire comporte plusieurs dispositifs (15A, 15B), dans lequels sont inscrites, pendant le fonctionnement, des tables de conversion d'information, ayant des caractéristiques de transformation différentes, qu'un circuit de commande (17, 23, 24, 25) est prévu pour sélectionner chaque fois le dispositif à table de conversion à utiliser pour la transformation et que ce circuit de commande (17, 23, 24, 25) est conçu pour sélectionner un dispositif à table de conversion particulier selon la zone d'image représentée.

2. Dispositif selon la revendication 1, dans lequel le circuit de commande est conçu pour sélectionner des informations, provenant du microprocesseur (18), ayant un niveau déterminé, en conformité avec un motif à représenter défini par le dispositif sélecteur d'adresses.

3. Dispositif selon la revendication 2, comportant, en outre, un registre (22) dans lequel sont stockées, pendant le fonctionnement, plusieurs informations ayant des niveaux déterminés et provenant du microprocesseur, et dans lequel le circuit de commande sélectionne plusieurs informations contenues dans ce registre.

4. Dispositif selon l'une quelconque des revendications précédentes, dans lequel des moyens sont prévus pour désigner la table de conversion d'informations qui est inscrite dans la mémoire.

5. Dispositif selon l'une quelconque des revendications précédentes, dans lequel la mémoire est utilisée comme une mémoire pour le microprocesseur.

6. Appareil selon l'une quelconques des revendications précédentes, dans lequel la mémoire est une mémoire à semi-conducteurs.

# FIG.1

FIG.2

# F I G.3A

# F I G.3B

# F I G.3C

# F I G.4

56 . 8 . 16

# F I G.5A

# F I G.5B

| $S_0$ | $S_1$ | $S_2$ | $S_3$ | $S_4$ | | | | |
|---|---|---|---|---|---|---|---|---|
| | | 1 | 1 | 1 | $W_1$ | $R_1$ | $G_1$ | $B_1$ |
| | | 1 | 1 | 0 | $W_2$ | $R_2$ | $G_2$ | $B_2$ |
| | | 1 | 0 | 1 | $W_3$ | $R_3$ | $G_3$ | $B_3$ |
| 0 | 0 | 1 | 0 | 0 | $W_4$ | $R_4$ | $G_4$ | $B_4$ |
| | | 0 | 1 | 1 | $W_5$ | $R_5$ | $G_5$ | $B_5$ |
| | | 0 | 1 | 0 | $W_6$ | $R_6$ | $G_6$ | $B_6$ |
| | | 0 | 0 | 1 | $W_7$ | $R_7$ | $G_7$ | $B_7$ |
| | | 0 | 0 | 0 | $W_8$ | $R_8$ | $G_8$ | $B_8$ |

# F I G.5C

$(S_0 \quad S_1) = (1 \quad 1)$

| | | | | | | | | |
|---|---|---|---|---|---|---|---|---|
| $S_0$ | 0 | | | | | | | |
| $S_1$ | 0 | | | | | | | |
| $S_2$ | 1 | 1 | 1 | 1 | 0 | 0 | 0 | 0 |
| $S_3$ | 1 | 1 | 0 | 0 | 1 | 1 | 0 | 0 |
| $S_4$ | 1 | 0 | 1 | 0 | 1 | 0 | 1 | 0 |

# F I G.5D

| W | $Y_l$ | $C_y$ | G | $M_y$ | R | B | $B_l$ |
|---|---|---|---|---|---|---|---|

4

# F I G.6A

# F I G.6B

# F I G.6C

# F I G.6D

# F I G.7

5